# EUROPÄISCHE PATENTSCHRIFT

(11) **EP 1 682 343 B1**
(45) Veröffentlichungstag und Bekanntmachung des Hinweises auf die Patenterteilung: **25.03.2015**
(21) Anmeldenummer: 04790817.3
(22) Anmeldetag: 25.10.2004
(51) Int. Cl.: B32B 5/18, B65D 65/40

(54) **VERPACKUNGSMATERIAL MIT EINER SCHICHT AUS GESCHÄUMTEM POLYOLEFIN**
PACKAGING MATERIAL COMPRISING A FOAMED POLYOLEFIN LAYER
MATERIAU D'EMBALLAGE COMPRENANT UNE COUCHE CONSTITUEE D'UNE MOUSSE DE POLYOLEFINE

(30) Priorität: 27.10.2003 DE 10350237
(43) Veröffentlichungstag der Anmeldung: 26.07.2006
(73) Patentinhaber: Schur Flexibles Dixie GmbH, 87437 Kempten (DE)
(72) Erfinder: FACKLER, Tobias, 87764 Legau (DE); BERNIG, Walter, 87471 Durach (DE); DUJARDIN, Bernard, B-1180 Brüssel (BE)
(74) Vertreter: Schneider, Michael
(86) Internationale Anmeldenummer: PCT/EP2004/012029
(87) Internationale Veröffentlichungsnummer: WO 2005/042245

(56) Entgegenhaltungen:
- EP-A- 0 570 222
- EP-B- 1 117 526
- WO-A-91/13933

## Beschreibung

Die Erfindung liegt auf dem Gebiet der Verpackungsindustrie und betrifft ein Verpackungsmaterial, das eine geschäumte Polyolefinschicht als Außenschicht umfaßt, die auf einer ihrer Oberflächen weitere Schichten aufweist sowie daraus hergestellte Verpackungen.

Verpackungsmaterialien mit einer Schaumschicht aus beispielsweise Polypropylen in Form von quasi endlosen, aufgerollten Bahnen werden zur Herstellung von thermogeformten, selbsttragenden Verpackungen wie beispielsweise Mulden für die Verpackung von Nahrungsmitteln verwendet. Dazu können derartige Verpackungsmaterialien auf sogenarinten "FFS-Maschinen" (Form-Füll-Siegelmaschinen) zu Verpackungen verarbeitet werden, wobei das bahnförmige Verpackungsmaterial in eine Form-Vorrichtung eingespeist, dort zu einer Bahn aus Mulden verformt, in die Mulden das Verpackungsgut eingefüllt und mit einem vorzugsweise transparenten Film durch Versiegeln verschlossen wird. Anschließend werden dann die verschlossenen Mulden voneinander getrennt.

Bei den bekannten Verpackungsmaterialien ist die Schicht aus geschäumtem Polyolefin zumindest auf einer Oberflächenseite mit weiteren Schichten versehen. Je nach Zusammensetzung und Dicke dieser Schichten können diese die Steifheit des Verpackungsmaterials erhöhen und/oder als Schutz der Schaumstoffoberfläche und/oder als Gas- und/oder Aromabarriere und/oder als eine Oberflächenschicht zum Versiegeln einer gefüllten Verpackungsmulde mit einer vorzugsweise transparenten Deckelfolie dienen.

Verpackungsmaterialien mit einer Schicht aus geschäumtem Polypropylen zur Herstellung von Verpackungsmulden durch Wärmeverformung sind beispielsweise in der EP-A- 0 570 222 beschrieben. Diese Materialien umfassen eine Schaumschicht und eine mehrschichtige Verbundfolie, die ggf. eine Barriereschicht, die das Verpackungsmaterial gas- und aromadicht macht, enthalten kann. Dieses mehrschichtige Verpackungsmaterial weist für selbsttragende Verpackungen nicht immer die gewünschten Eigenschaften auf.

In WO91/13933 werden thermoformbare geschäumte Filme aus Polypropylen, das spezielle rheologische und molekulare Charakteristika aufweisen muß, beschrieben, wobei den Polymeren zur Steuerung der Verschäumung weniger als 1 Gew.% Nukleierungsmittel ggf. zugesetzt wird. Weder geht aus dieser Veröffentlichung eine darauf zurückzuführende Verbesserung der mechanischen Eigenschaften noch eine Verkürzung der minimalen Taktzeit, d. h. Erhöhung der Produktionsgeschwindigkeit, bei der Verarbeitung der geschäumten Filme zu Verpackungsmulden hervor.

In EP-B-1 117 526 ist offenbart, die Schaumschicht mit einer kompakten Schicht aus einem Polyolefin der Schaumschicht unter Einhaltung eines bestimmten Dickenverhältnisses dieser beiden Schichten zueinander zu ergänzen, um die Selbsttragfähigkeit von aus diesem Verpackungsmaterial hergestellten Verpackungen ohne Erhöhung der Dicke des Verpackungsmaterials zu verbessern.

Obwohl dieses Verpackungsmaterial sehr gut z. B. durch Thermoverformung zu Verpackungen verarbeitet werden kann, besteht ein Bedarf wegen der immer schneller laufenden Verpackungsmaschine das Verpackungsmaterial so zu verbessern, dass es höhere Produktionsgeschwindigkeiten, d. h. kürzere Taktzeiten erlaubt, ohne dass es z. B. dabei zu Unregelmäßigkeiten in den Wandstärken der Verpackungsbehälter kommt und ohne dass die mechanische Festigkeit bzw. Steifigkeit und damit die Selbsttragfähigkeit der Verpackungsbehälter beeinträchtigt wird.

Diese Aufgabe wird erfindungsgemäß gelöst, indem ein Mehrschichtenfilm zur Verfügung gestellt wird, der folgende Schichtenfolge aufweist:
A) eine Basisschicht aus Polyolefinschaum enthaltend 0,5 bis 25 Gew.%, bezogen auf das Gesamtgewicht der Basisschicht, wenigstens eines Nukleierungsmittels,
B) eine Schicht basierend auf wenigstens einem Polyolefin der Schaumschicht A),
C) ggf. eine Verbindungsschicht basierend auf einem Polyolefin, das vorzugsweise auf demjenigen Monomer basiert, das das Hauptmonomer des Polyolefins der Schaumschicht A) ist,
D) ggf. eine Haftvermittlerschicht,
E) ggf. eine Gas- und/oder Aroma-Barriereschicht,
F) eine Haftvermittlerschicht,
G) eine ggf. siegelfähige und/oder peelfähige Oberflächenschicht,
wobei die Gesamtdicke der Schichten A) und B) im Bereich von 0,5 bis 2 mm und die Dicke der Schicht B) im Bereich von 1/6 bis 1/2 der Dicke der Schicht A) liegt.

Vorzugsweise liegt die Gesamtdicke der Schichten A) und B) im Bereich von 0,6 bis 1,4 mm und die Dicke der Schicht B) im Bereich von 1/6 bis 1/3 der Dicke der Schicht A).

Die Schaumschicht A) besteht aus wenigstens einem geschäumten Polyolefin. Dabei sind für die Herstellung von Verpackungen, wie beispielsweise Verpackungsmulden für die Verpackung von Lebensmitteln, geschäumte Propylen- Homo- und/oder Copolymere besonders geeignet, da diese Materialien bereits mit einer geringen Dicke und einer geringen Dichte selbsttragende Eigenschaften aufweisen. Es ist auch möglich, zur Herstellung der Schaumschicht Mischungen von Polyolefinen einzusetzen. Dabei eignet sich insbesondere eine Mischung aus Polypropylen mit einer Langkettenverzweigung und damit hoher Schmelzfestigkeit und einem Propylenethylencopolymer, wie z. B. einem heterophasigen Propylen-Ethylen-Blockcopolymeren. Insbesondere eignet sich eine Mischung aus einem Polypropylen mit einer Langkettenverzweigung und einem Schmelzindex MFI im Bereich von 1,4 bis 4,2 g/10 min (2,16 kg, 230°C gemessen gemäß ISO 1133) und einem heterophasigen Propylen-Ethylen-Blockcopolymer in einem Mischungsverhältnis von 1:1.

Die Verschäumung des Polyolefins der Schicht A) kann durch Zugabe von festen, flüssigen und/oder gasförmigen Verschäumungsmitteln erfolgen, die in üblichen Mengen, vorzugsweise in einer Menge von 0,5 bis 3 Gew.% dem Polyolefin zugegeben werden. Dabei wird auf die Offenbarung in EP-A- 0 570 222 Bezug genommen, die hiermit als Referenz eingeführt wird und als Teil der vorliegenden Offenbarung gilt.

Die Schaumschicht A) enthält 0,5 bis 25 Gew.%, vorzugsweise 2,1 bis 20 Gew.%, besonders bevorzugt mehr als 2,5 bis 15 Gew.%, bezogen auf das Gesamtgewicht der Schaumschicht A), wenigstens eines Nukleierungsmittels. Das Nukleierungsmittel ist vorzugsweise feinteilig mit einer durchschnitthichen Teilchengröße im Bereich von 4 bis 20 µm.

Als Nukleierungsmittel eignen sich alle bekannten, festen Nukleierungsmittel, vorzugsweise synthetische oder natürliche anorganische Verbindungen. Besonders bevorzugt wird wenigstens ein Nukleierungsmittel ausgewählt aus der Gruppe umfassend Talkum, Titandioxid, Siliziumdioxid, Calciumcarbonat, Magnesiumsilikat, Aluminiumsilikat, Calciumphosphat und Montmorillonit verwendet. Ganz besonders bevorzugt wird Talkum eingesetzt.

Das Nukleierungsmittel wird dem Polymeren, aus dem die Schaumschicht gefertigt werden soll, vorzugsweise in Form eines Masterbatch, das 30 bis 60 Gew.% Nukleierungsmittel in dem Polymer enthält, zugesetzt und vor der Verschäumung darin weitgehend homogen verteilt.

Die daraus erhaltene Schaumschicht A) zeichnet sich durch eine hohe Zahl von Zellen mit relativ geringen Größenabweichungen aus. Vorzugsweise beträgt die Zellenzahl gleich oder größer 250 Zellen/mm³, besonders bevorzugt gleich oder größer 300 Zellen/mm³, bis 600 Zellen/mm³ deren Größenschwankungen der Zellen im Bereich von ± 15%, vorzugsweise ± 10% liegen. Die Dichte der Schaumschicht A) liegt vorzugsweise im Bereich von 0,35 bis 0,55 g/cm³.

Die Dichte und die Zellenzahl kann außerdem durch die Verfahrensparameter, wie z. B. der Extrusionstemperatur oder andere Verfahrensparameter während der bevorzugten Herstellung der Schaumschicht durch Extrusion und Expansion variiert werden.

Die Schicht B) aus kompaktem Polyolefin basiert im wesentlichen auf wenigstens einem Polyolefin der geschäumten Basisschicht A). Sofern diese Basisschicht aus geschäumtem Polypropylen oder einer geschäumten Mischung aus Polypropylen und Propylen-Ethylen-Copolymer besteht, basiert die kompakte Polyolefinschicht B) vorzugsweise auf Polypropylen oder einem Propylen-Ethylen-Copolymer. Besonders bevorzugt ist ein heterophasiges Propylen-Ethylen-Blockcopolymer. Der Schmelzindex (MFI) der zur Herstellung der Schicht B) verwendeten Polyolefine liegt vorzugsweise im Bereich von 1,8 bis 5,5 g/10 min. gemessen wie vorstehend angegeben. Die Dicke der Schicht B) beträgt 1/6 bis 1/2, besonders bevorzugt 1/6 bis 1/3 der Dicke der Schicht A).

Die Schicht C) ist vorzugsweise vorhanden, sofern die Schichten D) bis G) durch Coextrusion, vorzugsweise durch Folienblascoextrusion, vorgefertigt werden und mit den übrigen Schichten zu verbinden sind. Die Schicht C) basiert auf einem Polyolefin, das vorzugsweise aus einem Monomer hergestellt wurde, das auch das Hauptmonomer der Polyolefine ist, aus denen die Schaumschicht A) besteht. Sofern daher die Schicht A) aus einem verschäumten Polypropylen und ggf. einem Propylen-Ethylen-Copolymer besteht, kann die Schicht C) aus Polypropylen bestehen, das ggf. aufgepfropfte Maleinsäureanhydrideinheiten aufweist. Auch Copolymere aus Ethylen/Vinylacetat können als weitere Komponente mitverwendet werden. Die Dicke der Schicht C) beträgt vorzugsweise 5 bis 25 µm, besonders bevorzugt 8 bis 15 µm.

Sofern die erfindungsgemäßen Mehrschichtfilme eine geringe Gasdurchlässigkeit, d. h. geringe Sauerstoff- und Feuchtigkeitsdurchlässigkeit sowie einen Aromaschutz aufweisen sollen, weisen sie eine Barriereschicht E) auf. Diese Barriereschicht ist vorzugsweise aus einem Ethylen/Vinylalkohol-Copolymer aufgebaut, das einen Anteil von Ethylen von 32 bis 45 Mol%, vorzugsweise 35 bis 42 Mol%, aufweist. Die Barriereschicht E) kann mit Hilfe einer Haftvermittlerschicht D) bzw. F) auf ihrer jeweiligen Oberfläche mit der Verbindungsschicht C) bzw. mit der Siegelschicht G) verbunden sein. Als Material wird dafür vorzugsweise ein Propylencopolymer bzw. ein Polyethylen, das aufgepfropfte Maleinsäureanhydrideinheiten aufweist, verwendet.

Die Oberflächenschicht G), die die 2. Außenschicht des erfindungsgemäßen Mehrschichtenfilms bildet, ist vorzugsweise siegelfähig und/oder peelfähig. Daher wird zur Herstellung dieser Schicht vorzugsweise ein Polyethylen niedriger Dichte (LDPE) mit einem Schmelzindex (MFI) im Bereich von 0,5 bis 8,0 g/10 min, vorzugsweise im Bereich von 1 bis 5 g/10 min (2,16 kg, 190°C gemessen gemäß ASTM D1238) oder ein Ionomer, wie z. B. ein Copolymer aus einem α-Olefin und einer ethylenisch ungesättigten Carbonsäure, wobei die Carboxylgruppen in einer Menge von 20 bis 100 Mol% als Metallsalz, vorzugsweise als Na-Salz, vorliegen, oder einem Ethylen-Vinylacetatcopolymer mit einem Vinylacetatgehalt von 3 bis 10 Gew.%, vorzugsweise 4 bis 6 Gew.%, zur Herstellung der siegelfähigen Schicht verwendet.

Gemäß einer besonders bevorzugten Ausführungsform ist die Siegelschicht auch peelfähig. Dazu wird als Schichtmaterial vorzugsweise eine Mischung aus LDPE und einem Polybutylen (PB) verwendet. Die Mischung enthält vorzugsweise 15 bis 30 Gew.%, vorzugsweise 20 bis 28 Gew.%, Polybutylen. Vorzugsweise weist das Polybutylen einen Schmelzindex (MFI) im Bereich von 0,3 bis 2,0 g/10 min (190°C und 2,16 kg gemäß ASTM 1238) auf.

Vorzugsweise liegt die Dicke der Oberflächenschicht im Bereich von 10 bis 50 µm, vorzugsweise von 15 bis 30 µm.

Wenn LDPE als Polymer zur Herstellung der Siegelschicht G) verwendet wird und der erfindungsgemäße Mehrschichtenfilm auch eine Barriereschicht umfaßt, dann ist vorzugsweise zur Verbindung der Barriereschicht und der Siegelschicht eine Haftvermittlerschicht notwendig, sofern als Barriereschichtmaterial nicht ein Ethylen-Vinylalkoholcopolymer verwendet wird. Als Material für die Haftvermittlerschicht kann ein Polyolefin, vorzugsweise ein Polyethylen mit gepfropften Maleinsäureanhydrideinheiten verwendet werden. Es ist aber auch möglich, eine Mischung aus LDPE und LLDPE im Verhältnis 3:1 bis 4:1 zu verwenden. Die Dicke der jeweiligen Haftvermittlerschicht liegt im Bereich von 2 bis 8 µm, vorzugsweise im Bereich von 3 bis 6 µm.

Die Oberflächenschicht G) kann übliche und bekannte Antibiotika, Gleitmittel und Antiblockmittel, wie z. B. Erukasäureamid, Polyalkylsiloxane, wie z. B. Polydimethylsiloxan und/oder Siliciumdioxid enthalten.

Alle oder nur einzelne Schichten der erfindungsgemäßen Mehrschichtenfilme können Stabilisatoren und weitere Additive bekannter Art enthalten.

Außerdem kann die Schicht B) 0,5 bis 2 Gew.% eines weißen Pigmentes, wie z. B. Kaolin, Kalziumcarbonat, Talk, Titandioxid oder deren Mischungen enthalten. Solche anorganischen Pigmente werden dem Polymer, aus dem die Schicht B) gefertigt wird, vorzugsweise in Form von Masterbatch, das 30 bis 70 Gew.% Pigmente enthält, zugegeben.

Die erfindungsgemäßen Mehrschichtenfilme können vorzugsweise durch übliche Folienblascoextrusionsverfahren oder durch Coextrusionflachfilmverfahren, soweit es die Sequenz der Schichten C) bis G) betrifft, hergestellt und vorzugsweise durch einen Extrusionlaminierungsschritt mit der PolyolefinSchaumschicht A) verbunden werden. Dazu wird die Schaumschicht A) und der Mehrschichtfilm, bestehend aus den Schichten C) bis G), so zusammengeführt, daß dazwischen die Schicht B) extrudiert wird. Unmittelbar nach der Extrusion wird auf das so hergestellte Laminat ein genügend großer Druck ausgeübt, damit die Schichten A) bis G) ausreichend miteinander verbunden werden.

Es ist aber auch möglich, die erfindungsgemäßen Mehrschichtenfilme nur durch Coextrusion herzustellen, wobei die Schaumschicht A) gleichzeitig mit den übrigen Schichten ggf. unter Weglassung der Schicht C) coextrudiert und die Schicht A) gleichzeitig verschäumt wird.

Die erfindungsgemäßen Mehrschichtenfilme weisen eine ausgezeichnete Thermoverformbarkeit auf sogenannten FFS-Maschinen (Form-, Füll- und Siegelmaschinen) auf und können auf diesen Maschinen zu Verpackungsbehältern, vorzugsweise zu tiefgezogenen Verpackungsmulden, verarbeitet, anschließend gefüllt und versiegelt werden. Es war überraschend, dass sich die erfindungsgemäßen Mehrschichtenfilme auf den FFS-Maschinen mit einer erhöhten Produktionsgeschwindigkeit ausgezeichnet verarbeiten lassen und gegenüber einem Verpackungsmaterial ohne erfindungsgemäße Modifizierung um bis zu 10% kürzere Taktzeiten und damit einen um bis zu 10% höheren Ausstoß an Verpackungsmulden ohne Beeinträchtigung der Gleichmäßigkeit der Wandstärken erlauben.

Die erfindungsgemäßen Mehrschichtfilme zeigen auch gegenüber den bekannten, unmodifizierten, vergleichbaren Verpackungsmaterialien, eine unerwartete Verbesserung der mechanischen Eigenschaften, insbesondere der Steifigkeit gemessen durch den E-Modul in Maschinenrichtung und der Zugspannung. Diese deutliche Verbesserung zeigt sich, ohne daß eine Erhöhung der Dicke der Mehrschichtfilme, die aus dem Stande der Technik bekannt sind, notwendig ist.

Außerdem zeigen die aus dem erfindungsgemäßen Mehrschichtenfilm hergestellten Verpackungen eine deutlich ebenmäßigere Oberflächenstruktur praktisch ohne Schaumaufrisse, wodurch ihre Handhabung ebenfalls verbessert wird.

Ein weiterer Gegenstand der vorliegenden Erfindung ist daher auch die Verwendung der erfindungsgemäßen mehrschichtigen Filme als Verpackungsmaterial, vorzugsweise auf Form-, Füll- und Siegelmaschinen (FFS-Maschinen), zur Verpackung von Lebensmitteln, insbesondere zur Verpackung von leicht verderblichen Lebensmitteln, wie Fleisch, Schinken oder Aufschnitt. Da die Verpackung auf diesen Maschinen oft diskontinuierlich durchgeführt wird, um unterschiedliche Güter zu verpacken, muß das Verpackungsmaterial auch ein relativ breites, sogenanntes Thermoformfenster aufweisen, in dem es thermoverformt werden kann. Dies ist bei dem erfindungsgemäßen Verpackungsmaterial gegeben, da es eine ausgezeichnete Thermoverformbarkeit, insbesondere eine Tiefziehverformbarkeit, aufweist.

Die thermoverformten, vorzugsweise tiefgezogenen Verpackungsartikel, wie z. B. Verpackungsmulden, vorzugsweise Tiefzieh-Verpackungsmulden, die aus den erfindungsgemäßen Mehrschichtenfilmen hergestellt wurden, können nach ihrem Befüllen mit bekannten Deckelfolien versiegelt werden. Als Deckelfolien eignen sich Mehrschichtfilme, vorzugsweise aus Polyethylenterephtalat/SiOₓ/Haftvermittlerschicht/Polyethylen niedriger Dichte oder aus Polyethylenterephtalat/Haftvermittlerschicht/Polyethylen/Haftvermittlerschicht/ Ethylen-Vinylalkoholcopolymer/Haftvermittlerschicht/Polyethylen.

Von den genannten Deckelfolien eignen sich insbesondere die erstgenannten Mehrschichtfilme. Dazu wird das biaxial orientierte Polyethylenterephtalat mit SiOₓ durch Plasmavakuumtechnik beschichtet. Mit Hilfe eines Haftvermittlers wird anschließend der bereits gefertigte Polyethylenfilm darauf laminiert. Eine solche Deckelfolie zeichnet sich insbesondere durch eine ausgezeichnete Transparenz und hohe Bruchfestigkeit aus. Außerdem zeigen Verpackungen, die eine solche Deckelfolie aufweisen, eine ausgezeichnete Gasbarriere.

In den nachfolgenden Beispielen wird der E-Modul bzw. die Zugspannung gemäß ISO 527-2 in Maschinenrichtung bzw. in deren Querrichtung bestimmt.

### Beispiele:

### Beispiel 1

Ein erfindungsgemäßer Mehrschichtenfilm mit folgenden Schichtaufbau:

| | |
|---|---|
| Schicht A) | eine Schaumschicht mit einer Dichte von 0,47 g/cm³ und einer Zellenzahl von 492 Zellen/mm³ aus einer Mischung von 50 Gew.% Polypropylen mit einer Langkettenverzweigung (High-melt-strength polypropylen) und 46 Gew.% eines heterophasigen |
| | Propylenethylenblockcopolymeren und 4 Gew.% feinteiliges Talkum. |
| Schicht B) | aus 100 Gew.% eines heterophasigen Propylenethylenblockcopolymer, das dem Blockcopolymeren der Schaumschicht A) entspricht |
| Schicht C) | aus einem Polypropylen, |
| Schicht D) | aus einem Haftvermittler auf Basis von Polypropylen gepfropft mit Maleinsäureanhydrideinheiten, |
| Schicht E) | als eine Gasbarriereschicht basierend auf einem EthylenVinylalkoholcopolymeren, |
| Schicht F) | als Haftvermittlerschicht mit demselben Aufbau wie Schicht D), |
| Schicht G) | als Siegelschicht basierend auf Polyethylen niedriger Dichte. |

Der mehrschichtige Film wird durch Coextrusion hergestellt.

Die Dicke der einzelnen Schichten ist Tabelle 1 zu entnehmen.

**Tabelle 1**

| Schicht | A) | B) | C) | D) | E) | F) | G) | Gesamt |
|---|---|---|---|---|---|---|---|---|
| Dicke in µm | 1130 | 264 | 15 | 5 | 5 | 5 | 20 | 1444 |

Die mechanischen Eigenschaften dieses Films sind Tabelle 2 zu entnehmen.

### Vergleichsbeispiel 1:

Entsprechend dem mehrschichtigen Film gemäß Beispiel 1 wurde ein Mehrschichtenfilm mit identischer Schichtfolge und bis auf Schicht A) mit identischen Schichtzusammensetzungen und identischen Schichtdicken hergestellt, wobei die Schicht A) dieselbe Polymerzusammensetzung wie in Beispiel 1, aber keine Nukleierungsmittel aufweist.

Die mechanischen Eigenschaften des Mehrschichtenfilms gemäß dem Vergleichsbeispiels sind Tabelle 2 zu entnehmen.

**Tabelle 2**

| | Einheit | Vergleichsbeispiel 1 | Beispiel 1 |
|---|---|---|---|
| E-Modul (Maschinenrichtung) | MPA | 519 | 703 |
| E-Modul (Querrichtung) | MPA | 280 | 280 |
| Zugspannung (Maschinenrichtung) | MPA | 9,3 | 12,0 |
| Zugspannung (Querrichtung) | MPA | 7,4 | 9,5 |
| Taktzeiten | Cycles/Minute | 8 | 9 |

Aus der Tabelle 2 ergibt sich, daß der erfindungsgemäße Mehrschichtenfilm weit bessere mechanische Werte aufweist als ein Mehrschichtenfilm mit unmodifizierter Schaumschicht A).

## Patentansprüche

1. Ein Mehrschichtenfilm umfassend folgende Schichtenfolge:
A) eine Basisschicht aus Polyolefinschaum enthaltend 0,5 bis 25 Gew%, bezogen auf das Gesamtgewicht der Basisschicht, wenigstens eines Nukleierungsmittels,
B) eine Schicht basierend auf wenigstens einem Polyolefin der Schaumschicht A)
C) ggf. eine Verbindungsschicht basierend auf einem Polyolefin,
D) ggf. eine Haftvermittlerschicht,
E) ggf. eine Gas- und/oder Aroma-Barriereschicht,
F) eine Haftvermittlerschicht,
G) eine ggf. siegelfähige und/oder peelfähige Oberflächenschicht
wobei die Gesamtdicke der Schichten A) und B) im Bereich von 0,5 bis 2 mm und die Dicke der Schicht B) im Bereich von 1/6 bis 1/2 der Dicke der Schicht A) liegt.

2. Ein Mehrschichtenfilm nach Anspruch 1, **dadurch gekennzeichnet, daß** die Gesamtdicke der Schichten A) und B) im Bereich von 0,6 bis 1,4 mm liegt.

3. Ein Mehrschichtenfilm nach Anspruch 1 oder 2, **dadurch gekennzeichnet, daß** die Dicke der Schicht B) im Bereich von 1/6 bis 1/3 der Dicke der Schicht A) liegt.

4. Ein Mehrschichtenfilm nach einem oder mehreren Ansprüchen 1 bis 3, **dadurch gekennzeichnet, daß** die Schicht A) auf verschäumtem Polypropylen oder einer verschäumten Mischung aus Polypropylen mit Langkettenverzweigung und einem Propylenethylen-copolymeren, vorzugsweise einem heterophasigen Propylen-Ethylen-Blockcopolymeren, basiert.

5. Ein Mehrschichtenfilm nach wenigstens einem der Ansprüche 1 bis 4, **dadurch gekennzeichnet, dass** die Schicht A) 2,1 bis 20 Gew.%, vorzugsweise 2,5 bis 15 Gew.% des Nukleierungsmittels enthält.

6. Ein Mehrschichtenfilm nach wenigstens einem der Ansprüche 1 bis 5, **dadurch gekennzeichnet, dass** als Nukleierungsmittel wenigstens ein Mittel aus der Gruppe Talkum, Titandioxid, Siliziumoxid, Calciumcarbonat, Magnesiumsilikat, Aluminiumsilikat, Calciumphosphat und Montmorillonite vorliegt.

7. Ein Mehrschichtenfilm nach einem oder mehreren Ansprüchen 1 bis 6, **dadurch gekennzeichnet, daß** die Schicht B) auf Polypropylen oder einem Propylenethylencopolymer basiert.

8. Ein Mehrschichtenfilm nach einem oder mehreren Ansprüchen 1 bis 7, **dadurch gekennzeichnet, daß** die Schicht C) auf einem Polyolefin, das auf demjenigen Monomer basiert, das das Hauptmonomer des Polyolefins der Schaumschicht A) ist, vorzugsweise auf Polypropylen basiert.

9. Ein Mehrschichtenfilm nach einem oder mehreren der Ansprüche 1 bis 8, **dadurch gekennzeichnet, daß** die Schicht E) auf einem Ethylenvinylalkoholcopolymeren basiert.

10. Ein Mehrschichtenfilm nach einem oder mehreren der Ansprüche 1 bis 9, **dadurch gekennzeichnet, daß** die Schicht G) auf einem siegelfähigen Polymeren, vorzugsweise auf einem Polyethylen niedriger Dichte oder einem Ionomer basiert und ggf. die üblichen Additive enthält.

11. Ein Mehrschichtenfilm nach einem oder mehreren der Ansprüche 1 bis 9, **dadurch gekennzeichnet, daß** die Schicht G) auf peelfähigen Polymeren, vorzugsweise auf einer Mischung aus Polyethylen niedriger Dichte und einem Polybutylen basiert und ggf. die üblichen Additive enthält.

12. Ein Mehrschichtenfilm gemäß einem oder mehreren der Ansprüche 1 bis 11, **dadurch gekennzeichnet, daß** die Gesamtdicke der Schichten C) bis G) 20 bis 70 µm, vorzugsweise 30 bis 50 µm, beträgt.

13. Verwendung eines Mehrschichtenfilmes gemäß einem oder mehreren Ansprüchen 1 bis 12 als Verpackungsmaterial.

14. Verpackungsbehälter, vorzugsweise Verpackungsmulden, aus einem Film gemäß wenigstens einem der Ansprüche 1 bis 12.

15. Verpackungsbehälter nach Anspruch 14 zur Verpackung von Nahrungsmitteln, vorzugsweise festen Nahrungsmitteln.

16. Verpackungsbehälter nach Anspruch 15 zum Verpacken von Fleisch, Wurst oder Käse.

17. Verwendung eines Mehrschichtenfilmes gemäß einem oder mehreren Ansprüchen 1 bis 12 als Verpackungsmaterial auf Form-, Füll- und Siegelpackungsmaschinen.

## Claims

1. A multilayer film comprising the following sequence of layers:
A) a base layer of polyolefin foam containing 0.5 to 25 wt.%, relative to the total weight of the base layer, of at least one nucleating agent,
B) a layer based on at least one polyolefin of the foam layer A)
C) optionally a bonding layer based on a polyolefin,
D) optionally a coupling agent layer,
E) optionally a gas- and/or aroma-barrier layer,
F) a coupling agent layer,
G) an optionally heat-sealable and/or peelable surface layer
wherein the total thickness of layers A) and B) is in the range from 0.5 to 2 mm and the thickness of layer B) is in the range from 1/6 to 1/2 of the thickness of layer A).

2. A multilayer film according to claim 1, **characterised in that** the total thickness of layers A) and B) is in the range from 0.6 to 1.4 mm.

3. A multilayer film according to claim 1 or claim 2, **characterised in that** the thickness of layer B) is in the range from 1/6 to 1/3 of the thickness of layer A).

4. A multilayer film according to one or more of claims 1 to 3, **characterised in that** layer A) is based on foamed polypropylene or a foamed blend of polypropylene with long-chain branching and a propylene-ethylene copolymer, preferably a heterophase propylene-ethylene block copolymer.

5. A multilayer film according to at least one of claims 1 to 4, **characterised in that** layer A) contains 2.1 to 20 wt..%, preferably 2.5 to 15 wt.% of the nucleating agent.

6. A multilayer film according to at least one of claims 1 to 5, **characterised in that** at least one agent from the group talcum, titanium dioxide, silicon oxide, calcium carbonate, magnesium silicate, aluminium silicate, calcium phosphate and montmorillonite is present as the nucleating agent.

7. A multilayer film according to one or more of claims 1 to 6, **characterised in that** layer B) is based on polypropylene or a propylene-ethylene copolymer.

8. A multilayer film according to one or more of claims 1 to 7, **characterised in that** layer C) is based on a polyolefin, which is based on the particular monomer which is the main monomer of the polyolefin of the foam layer A), preferably on polypropylene.

9. A multilayer film according to one or more of claims 1 to 8, **characterised in that** layer E) is based on an ethylene-vinyl alcohol copolymer.

10. A multilayer film according to one or more of claims 1 to 9, **characterised in that** layer G) is based on a heat-sealable polymer, preferably on a low density polyethylene or an ionomer and optionally contains conventional additives.

11. A multilayer film according to one or more of claims 1 to 9, **characterised in that** layer G) is based on peelable polymers, preferably on a blend of low density polyethylene and a polybutylene and optionally contains conventional additives.

12. A multilayer film according to one or more of claims 1 to 11, **characterised in that** the total thickness of layers C) to G) amounts to 20 to 70 µm, preferably to 30 to 50 µm.

13. Use of a multilayer film according to one or more of claims 1 to 12 as a packaging material.

14. Packaging containers, preferably packaging trays, made from a film according to at least one of claims 1 to 12.

15. Packaging containers according to claim 14 for packaging foodstuffs, preferably solid foodstuffs.

16. Packaging containers according to claim 15 for packaging meat, sausage or cheese.

17. Use of a multilayer film according to one or more of claims 1 to 12 as a packaging material on form-fill-seal machines.

## Revendications

1. Film multicouche comprenant la succession de couches suivante :
A) une couche de base en mousse de polyoléfine contenant 0,5 à 25 % en poids, par rapport au poids total de la couche de base, d'au moins un agent de nucléation,
B) une couche à base d'au moins une polyoléfine de la couche de mousse A),
C) éventuellement une couche de liaison à base d'une polyoléfine,
D) éventuellement une couche de promoteur d'adhésion,
E) éventuellement une couche de barrière contre les gaz et/ou les arômes,
F) une couche de promoteur d'adhésion,
G) une couche de surface éventuellement scellable et/ou pelable,
l'épaisseur totale des couches A) et B) étant dans la plage allant de 0,5 à 2 mm et l'épaisseur de la couche B) étant dans la plage allant de 1/6 à 1/2 de l'épaisseur de la couche A).

2. Film multicouche selon la revendication 1, **caractérisé en ce que** l'épaisseur totale des couches A) et B) est dans la plage allant de 0,6 à 1,4 mm.

3. Film multicouche selon la revendication 1 ou 2, **caractérisé en ce que** l'épaisseur de la couche B) est dans la plage allant de 1/6 à 1/3 de l'épaisseur de la couche A).

4. Film multicouche selon une ou plusieurs des revendications 1 à 3, **caractérisé en ce que** la couche A) est à base de polypropylène moussé ou d'un mélange moussé de polypropylène à ramification de chaîne longue et d'un copolymère de propylène-éthylène, de préférence d'un copolymère séquencé de propylène-éthylène hétérophasique.

5. Film multicouche selon au moins l'une quelconque des revendications 1 à 4, **caractérisé en ce que** la couche A) contient 2,1 à 20 % en poids, de préférence 2,5 à 15 % en poids, de l'agent de nucléation.

6. Film multicouche selon au moins l'une quelconque des revendications 1 à 5, **caractérisé en ce qu'**en tant qu'agent de nucléation, au moins un agent du groupe constitué par le talc, le dioxyde de titane, l'oxyde de silicium, le carbonate de calcium, le silicate de magnésium, le silicate d'aluminium, le phosphate de calcium et la montmorillonite est présent.

7. Film multicouche selon une ou plusieurs des revendications 1 à 6, **caractérisé en ce que** la couche B) est à base de polypropylène ou d'un copolymère de propylène-éthylène.

8. Film multicouche selon une ou plusieurs des revendications 1 à 7, **caractérisé en ce que** la couche C) est à base d'une polyoléfine, qui est à base du monomère qui est le monomère principal de la polyoléfine de la couche de mousse A), de préférence de polypropylène.

9. Film multicouche selon une ou plusieurs des revendications 1 à 8, **caractérisé en ce que** la couche E) est à base d'un copolymère d'éthylène-alcool vinylique.

10. Film multicouche selon une ou plusieurs des revendications 1 à 9, **caractérisé en ce que** la couche G) est à base d'un polymère scellable, de préférence d'un polyéthylène de faible densité ou d'un ionomère, et contient éventuellement les additifs usuels.

11. Film multicouche selon une ou plusieurs des revendications 1 à 9, **caractérisé en ce que** la couche G) est à base de polymères pelables, de préférence d'un mélange de polyéthylène de faible densité et d'un polybutylène, et contient éventuellement les additifs usuels.

12. Film multicouche selon une ou plusieurs des revendications 1 à 11, **caractérisé en ce que** l'épaisseur totale des couches C) à G) est de 20 à 70 µm, de préférence de 30 à 50 µm.

13. Utilisation d'un film multicouche selon une ou plusieurs des revendications 1 à 12 en tant que matériau d'emballage.

14. Contenant d'emballage, de préférence cuvettes d'emballage, à base d'un film selon au moins l'une quelconque des revendications 1 à 12.

15. Contenant d'emballage selon la revendication 14, pour l'emballage de produits alimentaires, de préférence de produits alimentaires solides.

16. Contenant d'emballage selon la revendication 15, pour l'emballage de viande, de saucisse ou de fromage.

17. Utilisation d'un film multicouche selon une ou plusieurs des revendications 1 à 12 en tant que matériau d'emballage sur des machines d'emballage par moulage, remplissage et scellage.
